(19) Europäisches Patentamt
European Patent Office
Office européen des brevets

(11) EP 4 403 584 A1

(12) EUROPEAN PATENT APPLICATION

(43) Date of publication:
**24.07.2024 Bulletin 2024/30**

(21) Application number: **24151832.3**

(22) Date of filing: **15.01.2024**

(51) International Patent Classification (IPC):
***C08F 210/16*** *(2006.01)* ***C08F 2/04*** *(2006.01)*
*C08F 210/14* *(2006.01)* *C08F 4/685* *(2006.01)*

(52) Cooperative Patent Classification (CPC):
(C-Sets available)
**C08F 210/16** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.01.2023 KR 20230008232**

(71) Applicants:
- **SK Innovation Co., Ltd.**
  **Seoul 03188 (KR)**
- **SK Geo Centric Co., Ltd.**
  **Jongno-gu**
  **Seoul 03161 (KR)**

(72) Inventors:
- **EO, Maeng Sun**
  **34124 Daejeon (KR)**
- **KANG, Mun Hyung**
  **34124 Daejeon (KR)**
- **CHOI, Hye Rin**
  **34124 Daejeon (KR)**

(74) Representative: **Frick, Robert**
**Lorenz Seidler Gossel**
**Rechtsanwälte Patentanwälte**
**Partnerschaft mbB**
**Widenmayerstraße 23**
**80538 München (DE)**

# (54) METHOD FOR MANUFACTURING POLYETHYLENE

(57) The present invention relates to a method for manufacturing polyethylene. Specifically, method comprises supplying a first mixed solution including a monomer, a solvent, and a scavenger and a second mixed solution including a Ziegler-Natta unsupported catalyst and a solvent to a continuous reactor to perform polymerization at a high temperature of 200°C, and may solve a problem of an increase in an added catalyst amount during operation for a long time while having excellent catalytic activity is provided.



Processed by Luminess, 75001 PARIS (FR)

(Cont. next page)

(52) Cooperative Patent Classification (CPC): (Cont.)

C-Sets
**C08F 210/16, C08F 2/04;**
**C08F 210/16, C08F 4/685**

## Description

### TECHNICAL FIELD

The present invention relates to a method for manufacturing polyethylene.

### BACKGROUND

In general, polyethylene is manufactured by polymerizing ethylene in the presence of a Ziegler-Natta catalyst or a metallocene catalyst. However, impurities such as alcohols, aldehydes, and ketones may occur during the ethylene polymerization process. Since catalytic activity may be reduced due to the impurities, the yield of polyethylene is decreased. When the solvent is recirculated and used, some impurities remain even after residual impurities are purified, so that the catalytic activity is decreased. In addition, when an unsupported catalyst is used in the ethylene polymerization process, foreign matter occurs in catalyst deactivation and removal processes and the like, which affect the catalytic activity.

### SUMMARY

The present invention aims to providing a polyethylene polymerization method which suppresses a decrease in catalytic activity and has high productivity even when ethylene is polymerized using a Ziegler-Natta catalyst.

The present invention further aims to polymerize polyethylene by suppressing and absorbing impurities such as ketones occurring during polymerization of polyethylene.

The present invention yet further aims to solve a problem of a gradual increase in a catalyst content in order to maintain polyethylene productivity when impurities occur due to the nature of a continuous process.

Against this background, the invention relates to a method for manufacturing polyethylene, the method including: supplying a first mixture including a monomer, a solvent, and a scavenger to a continuous stirring type reactor through a first line; supplying a second mixture including a Ziegler-Natta unsupported catalyst to the continuous stirring type reactor through a second line; and manufacturing a polyethylene polymer in the continuous stirring type reactor through polymerization of the ethylene, wherein a polymerization temperature T of the continuous stirring type reactor is 200°C or higher.

In an exemplary embodiment, the solvent may include a purified and recycled solvent.

In an exemplary embodiment, the solvent may be purified by distillation an subsequent adsorption.

In an exemplary embodiment, adsorbents used in the adsorption may be selected from silica gel or zeolite-based adsorbents.

In an exemplary embodiment, the solvent may be recycled from a method for manufacturing polyethylene, preferably from a method of the invention.

In an exemplary embodiment, the solvent may be any one or two or more selected from pentane, hexane, cyclohexane, methylcyclohexane, heptane, octane, decane, and isopentane.

In an exemplary embodiment, the polymerization temperature T of the continuous stirring type reactor may be 210°C or higher.

In an exemplary embodiment, the polymerization temperature T of the continuous stirring type reactor may be 220°C or higher.

In an exemplary embodiment, the polymerization temperature T of the continuous stirring type reactor may be 230°C or higher.

In an exemplary embodiment, the scavenger may include a scavenger represented by the following Chemical Formula 1:

[Chemical Formula 1]

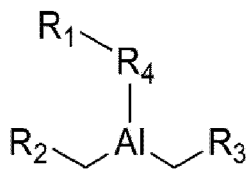

wherein $R_2$, $R_2$, and $R_3$ are independently $C_1$-$C_{10}$ alkyl, $C_6$-$C_{10}$ aryl, or hydrogen, and $R_4$ is $C_1$-$C_{10}$ alkylene, O, or N.

In an exemplary embodiment, the second mixture may further include the scavenger.

In an exemplary embodiment, a first scavenger and a second scavenger may be the same as or different from each other.

In an exemplary embodiment, the ratio of the weight contents of the first scavenger and the second scavenger supplied to the continuous stirring type reactor may be represented by the following Equation 1:

[Equation 1]

$$0.5 < \frac{\text{first scavenger}}{\text{second scavenger}} < 1.7$$

In an exemplary embodiment, the second mixture may include a cocatalyst, preferably selected from an aluminum-containing cocatalyst, a boron-containing cocatalyst, or a fluorinated catalyst

In an exemplary embodiment, the second mixture may include a molecular weight modifier, preferably selected from acetone, propionaldehyde, methyl ethyl ketone, propane, propylene, 1-butene, isobutene, pentene, hexene, heptene, and octane.

Other features and aspects will be apparent

from the following detailed description, the drawings, and the claims.

## DETAILED DESCRIPTION OF EMBODIMENTS

Hereinafter, the present invention will be described in more detail with reference to exemplary embodiments including the accompanying drawings.

The term "polymerization" in the present disclosure is used to mean that copolymerization as well as homopolymerization is included, and the term "polymer" is used to mean that copolymer as well as homopolymer is included.

A metallocene catalyst in a conventional polyethylene polymerization method has a merit of having better physical properties than a Ziegler-Natta catalyst, but has a narrower PDI value than the Ziegler-Natta catalyst and has decreased processability of a polyethylene resin. Accordingly, a study for providing a polyethylene resin having excellent processability using the Ziegler-Natta catalyst continues.

Among the Ziegler-Natta catalysts, an unsupported catalyst has basically higher high-temperature stability than the Ziegler-Natta supported catalyst at 200°C or higher, but side reaction may occur in a catalyst deactivation and removal process and the like to produce impurities.

Accordingly, in the conventional polyethylene polymerization method, when polyethylene is polymerized with an unsupported catalyst at a high temperature, a decrease in catalytic activity is rapidly increased, and thus, it is difficult to mass-produce polyethylene.

The present invention relates to a method for manufacturing polyethylene, the method including: supplying a first mixture including a monomer, a solvent, and a scavenger to a continuous stirring type reactor through a first line; supplying a second mixture including a Ziegler-Natta catalyst to the continuous stirring type reactor through a second line; and manufacturing a polyethylene polymer in the continuous stirring type reactor through polymerization of the ethylene, wherein a polymerization temperature T of the continuous stirring type reactor is 200°C or higher. The method has excellent productivity even when using a recycled solvent at 200°C or higher.

The Ziegler-Natta catalyst may include an unsupported Ziegler-Natta catalyst.

The polyethylene polymerization method may further include a comonomer. The comonomer may be any one or more comonomers selected from propylene, 1-butene, 1-pentene, 4-methyl-1-pentene, 1-hexene, 1-heptene, and 1-octene, and for example, any one or more comonomers selected from 1-hexene, 1-heptene, and 1-octene.

The ethylene and comonomer input ratio may be 1:0.001 to 1.5 ethylene: comonomer on a molar basis, but is not limited thereto.

In order to perform polyethylene polymerization at a high temperature, a pure solvent may be used, but since catalyst replacement may be expensive, it is efficient to recycle and use the solvent. However, the recycled solvent may include impurities produced in the polyethylene manufacturing and is highly likely to decrease catalytic activity.

Thus, the present invention introduces the polyethylene polymerization method, thereby minimizing a decrease in activity of an unsupported Ziegler-Natta catalyst even at 200°C or higher to polymerize polyethylene, and this, it is economical and has excellent productivity.

In an exemplary embodiment, the solvent may be a purified and recycled solvent, and the solvent may be purified using a purification step; and an adsorption step after the purification step, as an example. As an example, it may be a recycled solvent obtained by separating materials in the solvent by a distillation column and then adsorbing and purifying foreign matter in the solvent using an adsorbent such as a silica gel or zeolite-based adsorbents.

In an exemplary embodiment, the type of solvent may include any one or two or more selected from pentane, hexane, cyclohexane, methylcyclohexane, heptane, octane, decane, and isopentane.

The content of the solvent may be 300 to 1000 parts by weight based on 100 parts by weight of ethylene gas, but is not limited thereto.

A mixture in which the purified solvent, a scavenger, and a monomer are mixed is added to a continuous reactor through a first line, an unsupported Ziegler-Natta catalyst is added through a second line, and then polyethylene polymerization may be performed at a polymerization temperature of 200°C or higher.

The polymerization temperature may be 200°C or higher, and for example, may be 210°C or higher, 220°C or higher, or 230°C or higher as a lower limit and 400°C or lower or 300°C or lower as an upper limit, and for example, may be 200 to 400°C, for example, 220 to 300°C.

A transition metal compound and an organic metal compound which are the components of the unsupported Ziegler-Natta catalyst will be described.

In an exemplary embodiment, the transition metal compound may include one or more of halides, alkoxides, and phenoxides of any one metal selected from titanium (Ti), zirconium (Zr), hafnium (Hf), vanadium (V), niobium (Nb), and tantalum (Ta). In an exemplary embodiment, the transition metal compound may include a titanium (Ti) halide or a titanium (Ti) ethoxylate. In an exemplary embodiment, the transition metal compound may include a titanium (Ti) chloride.

The content of the transition metal compound may be 0.1 to 100 ppm per weight of ethylene, but is not limited thereto.

In an exemplary embodiment, an organometallic compound may include one or more of alkyl compounds, alkyl halides, and aryl compounds of any one metal selected from aluminum (Al), lithium (Li), magnesium (Mg), and zinc (Zn). In an exemplary embodiment,

the organometallic compound may include an organoaluminum (Al) compound.

The content of the organometallic compound may be 1 to 200 ppm per weight of ethylene, but is not limited thereto.

As an example, the organoaluminum compound may include any one or two or more of triethyl aluminum, triisobutyl aluminum, trihexyl aluminum, diethylaluminum hydride, diisobutylaluminum hydride, diethylaluminum chloride, di-n-propylaluminum chloride, di-n-butylaluminum chloride, di-i-butylaluminum chloride, ethylaluminum dichloride, diethylaluminum ethoxide, i-butylaluminum dichloride, and n-octylaluminum, and for example, may include any one or two or more of diethylaluminum chloride, di-n-propylaluminum chloride, di-n-butylaluminum chloride, and di-i-butylaluminum chloride, and diethylaluminum ethoxide.

By using the unsupported Ziegler-Natta catalyst, basic activity is excellent at a high temperature of 200°C or higher, but activity may be decreased due to impurities produced in the polyethylene manufacturing.

Thus, by including a scavenger in the first mixture added from the first line to the continuous reactor, a problem of an increase in an added catalyst amount during operation for a long time may be solved while catalytic activity is excellent, even when polymerization is performed at 200°C or higher in the continuous reactor.

The polymerization time may be 1 minute or more, 2 minutes or more, 3 minutes or more, 4 minutes or more, or 5 minutes or more as a lower limit and 10 minutes or less, 9 minutes or less, 8 minutes or less, or 7 minutes or less as an upper limit, and for example, may be 1 to 10 minutes, 1 to 7 minutes, 1 to 6 minutes, or 1 to 5 minutes.

In an exemplary embodiment, the scavenger may include a scavenger represented by the following Chemical Formula 1, and for example, may be triethylaluminum, tributylaluminum, trioctylaluminu or diethylaluminum ethoxide:

[Chemical Formula 1]

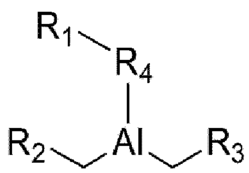

wherein $R_2$, $R_2$, and $R_3$ is independently $C_1$-$C_{10}$ alkyl, $C_6$-$C_{10}$ aryl, or hydrogen, and $R_4$ is $C_1$-$C_{10}$ alkylene, O, or N.

For example, in Chemical Formula 1, $R_1$, $R_2$, or $R_3$ is independently $C_2$-$C_5$ alkyl or hydrogen, and $R_4$ is $C_1$-$C_{10}$ alkylene.

The content of the scavenger may be 0.01 to 100 ppm per the solvent weight, but is not limited thereto.

Since the first mixture includes the scavenger, the scavenger may strongly react with impurities inside a recycled solvent or a novel solvent and also serve as a cocatalyst during polyethylene polymerization, and as the first mixture and the second mixture are mixed, catalytic activity may be maintained for a long time even at 200°C or higher.

In an exemplary embodiment, the second mixture may further include the scavenger. Since the second mixture further includes the scavenger, activity and lifespan of the catalyst may be better.

In an exemplary embodiment, the first scavenger and the second scavenger may be the same as or different from each other.

The first scavenger and the second scavenger may be chemically the same as or different from each other, but is not limited thereto. For example, both of the first scavenger and the second scavenger may be triethylaluminum, or the first scavenger may be triethylaluminum and the second scavenger may be triethylaluminum, tributylaluminum, trioctylaluminu or diethylaluminum ethoxide.

In an exemplary embodiment, the ratio of the molar contents of the first scavenger and the second scavenger supplied to the continuous stirring type reactor may be represented by the following Equation 1:

[Equation 1]

$$0.5 < \frac{\text{first scavenger}}{\text{second scavenger}} < 1.7$$

In an exemplary embodiment, the first mixture may include a cocatalyst and/or a molecular weight modifier.

The cocatalyst may be any cocatalyst known for the purpose, and for example, may be an aluminum-containing cocatalyst, a boron-containing cocatalyst, or a fluorinated catalyst. The aluminum-containing cocatalyst may include alumoxane, alkylaluminum, a Lewis acid, and/or a fluorinated catalytic support.

The Ziegler-Natta catalysts may be 0.5 to 30 ppm relative to the weight of the solvent, 1 to 30 ppm relative to the weight of the solvent, and 1 to 20 ppm relative to the weight of the solvent, but is not limited thereto.

Additionally, the cocatalyst may have a molar ratio of 1 to 10 times that of the Ziegler-Natta catalyst, but is not limited thereto.

The molecular weight modifier may be acetone, propionaldehyde, methyl ethyl ketone, or olefin-based hydrocarbons such as propylene, 1-butene, isobutene, pentene, hexene, heptene, and octene.

The content of the molecular weight modifier may be 0.1 to 100 ppm per the solvent weight, but is not limited thereto.

Hereinafter, the present invention will be described in more detail with reference to examples and comparative examples.

[Example 1]

1 kg of cyclohexane, 200 ml of 1-octene, and 600 ml of hydrogen were added to a 3 L batch reactor, and ethylene was supplied at a pressure of 30 bar. Thereafter, 10 mg of impurities (2-heptanone) and 30 ml of cyclohexane including 6 mg of triethylaluminum as a scavenger were supplied from a first line and tetratitanium chloride (3 mg), vanadium oxychloride (3 mg), diethylaluminum chloride (8 mg), and diethylaluminum ethoxide (12 mg) were supplied from a second line to perform a polymerization reaction. The polymerization reaction conditions were at 230°C for 3 minutes, and a polymer solution polymerized after completing the reaction was dried after drain to obtain a polymer.

[Example 2]

The method was performed in the same manner as in Example 1, except that 12 mg of triethylaluminum was added instead of 6 mg.

[Example 3]

The method was performed in the same manner as in Example 1, except that 18 mg of triethylaluminum was added instead of 6 mg.

[Example 4]

The method was performed in the same manner as in Example 1, except that 24 mg of triethylaluminum was added instead of 6 mg.

[Comparative Example 1]

The method was performed in the same manner as in Example 1, except that the scavenger (triethylaluminum) was not added.

[Table 1]

| | Polymer Yield (g) |
|---|---|
| Example 1 | 30 |
| Example 2 | 70 |
| Example 3 | 74 |
| Example 4 | 53 |
| Comparative Example 1 | 0 |

When polyethylene is polymerized by the method of the present invention, a decrease in catalytic activity is minimized while a catalyst lifespan is maintained even at a high temperature, and thus, polyethylene may be continuously polymerized in large quantities with a relatively small amount of a catalyst added.

In addition, the method of the present invention may suppress occurrence of a side reaction as much as possible even when a used and purified solvent is used.

## Claims

1. A method for manufacturing polyethylene, the method comprising:

    supplying a first mixture including a monomer, a solvent, and a scavenger to a continuous stirring type reactor through a first line;
    supplying a second mixture including a Ziegler-Natta unsupported catalyst to the continuous stirring type reactor through a second line; and
    manufacturing a polyethylene polymer in the continuous stirring type reactor through polymerization of the ethylene,
    wherein a polymerization temperature T of the continuous stirring type reactor is 200°C or higher.

2. The method of claim 1, wherein the solvent is a purified and recycled solvent.

3. The method of claim 2, wherein the solvent is purified by distillation an subsequent adsorption.

4. The method of claim 3, wherein adsorbents used in the adsorption are selected from silica gel or zeolite-based adsorbents.

5. The method of any one of claims 2 to 4, wherein the solvent is recycled from a method for manufacturing polyethylene, preferably from a method as of claim 1.

6. The method of any preceding claim, wherein the solvent is any one or two or more selected from pentane, hexane, cyclohexane, methylcyclohexane, heptane, octane, decane, and isopentane.

7. The method of any preceding claim, wherein a polymerization temperature T of the continuous stirring type reactor is 210°C or higher.

8. The polyethylene manufacturing process of claim 7, wherein a polymerization temperature T of the continuous stirring type reactor is 220°C or higher.

9. The polyethylene manufacturing process of claim 8, wherein a polymerization temperature T of the continuous stirring type reactor is 230°C or higher.

**10.** The method of any preceding claim, wherein the scavenger includes a scavenger represented by the following Chemical Formula 1:

[Chemical Formula 1]

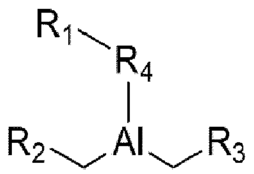

wherein $R_2$, $R_2$, and $R_3$ is independently $C_1$-$C_{10}$ alkyl, $C_6$-$C_{10}$ aryl, or hydrogen, and $R_4$ is $C_1$-$C_{10}$ alkylene, O, or N.

**11.** The method of any preceding claim, wherein the second mixture further includes a scavenger.

**12.** The method of claim 11, wherein the first scavenger and the second scavenger are the same as or different from each other.

**13.** The method of any preceding claim, wherein the ratio of the molar contents of the first scavenger and the second scavenger supplied to the continuous stirring type reactor is represented by the following Equation 1:

[Equation 1]

$$0.5 < \frac{\text{first scavenger}}{\text{second scavenger}} < 1.7$$

**14.** The method of any preceding claim, wherein the second mixture includes a cocatalyst, preferably selected from an aluminum-containing cocatalyst, a boron-containing cocatalyst, or a fluorinated catalyst.

**15.** The method of any preceding claim, wherein the second mixture includes a molecular weight modifier, preferably selected from acetone, propionaldehyde, methyl ethyl ketone, propane, propylene, 1-butene, isobutene, pentene, hexene, heptene, and octane.

Europäisches Patentamt
European Patent Office
Office européen des brevets

# EUROPEAN SEARCH REPORT

Application Number
EP 24 15 1832

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 057 050 A2 (DU PONT CANADA [CA]; DU PONT [US]) 4 August 1982 (1982-08-04)<br>* example IX *<br>* page 3, line 10 - line 29 *<br>* page 4, line 34 - line 36 *<br>* p. 8-9: bridging paragraph *<br>* page 9, line 15 - line 23 *<br>* page 11, line 8 - line 19 *<br>* examples I, II *<br>----- | 1-15 | INV.<br>C08F210/16<br>C08F2/04<br><br>ADD.<br>C08F210/14<br>C08F4/685 |
| A | EP 1 833 910 A1 (EXXONMOBIL CHEM PATENTS INC [US]) 19 September 2007 (2007-09-19)<br>* example 1 *<br>* paragraph [0064] *<br>----- | 1-15 | |

TECHNICAL FIELDS SEARCHED (IPC)

C08F

The present search report has been drawn up for all claims

2

| Place of search | Date of completion of the search | Examiner |
|---|---|---|
| Munich | 29 May 2024 | Gamb, Véronique |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 15 1832

This annex lists the patent family members relating to the patent documents cited in the above-mentioned European search report. The members are as contained in the European Patent Office EDP file on
The European Patent Office is in no way liable for these particulars which are merely given for the purpose of information.

29-05-2024

| Patent document cited in search report | Publication date | Patent family member(s) | Publication date |
|---|---|---|---|
| EP 0057050 A2 | 04-08-1982 | AU 559022 B2 | 19-02-1987 |
| | | CA 1171065 A | 17-07-1984 |
| | | EP 0056684 A2 | 28-07-1982 |
| | | EP 0057050 A2 | 04-08-1982 |
| | | JP S6333761 B2 | 06-07-1988 |
| | | JP S6334883 B2 | 12-07-1988 |
| | | JP S57137305 A | 24-08-1982 |
| | | JP S57137306 A | 24-08-1982 |
| | | US 4483938 A | 20-11-1984 |
| | | US 4547473 A | 15-10-1985 |
| EP 1833910 A1 | 19-09-2007 | AT E440909 T1 | 15-09-2009 |
| | | CA 2586907 A1 | 22-06-2006 |
| | | CN 101080459 A | 28-11-2007 |
| | | CN 101080461 A | 28-11-2007 |
| | | CN 101080462 A | 28-11-2007 |
| | | CN 101111555 A | 23-01-2008 |
| | | CN 104963085 A | 07-10-2015 |
| | | EP 1833910 A1 | 19-09-2007 |
| | | JP 4809845 B2 | 09-11-2011 |
| | | JP 2008524460 A | 10-07-2008 |
| | | US 2006172647 A1 | 03-08-2006 |
| | | WO 2006065663 A1 | 22-06-2006 |

EPO FORM P0459

For more details about this annex : see Official Journal of the European Patent Office, No. 12/82